# EUROPEAN PATENT SPECIFICATION

(11) **EP 2 731 186 B1**
(45) Date of publication and mention of the grant of the patent: **27.09.2017**
(21) Application number: 11869174.0
(22) Date of filing: 06.12.2011
(51) Int. Cl.: H01G 11/12, H01G 11/52, H01G 11/82, H01G 11/84, H01M 10/052, H01M 4/36, H01M 4/62, H01M 2/16, H01M 10/04

(54) **ELECTRODE ASSEMBLY FOR AN ELECTROCHEMICAL DEVICE AND ELECTROCHEMICAL DEVICE INCLUDING SAME**
ELEKTRODENANORDNUNG FÜR EINE ELEKTROCHEMISCHE VORRICHTUNG UND ELEKTROCHEMISCHE VORRICHTUNG DAMIT
ENSEMBLE ÉLECTRODE POUR DISPOSITIF ÉLECTROCHIMIQUE ET DISPOSITIF ÉLECTROCHIMIQUE LE COMPRENANT

(30) Priority: 07.07.2011 KR 20110067226; 05.12.2011 KR 20110128945
(43) Date of publication of application: 14.05.2014
(73) Proprietor: LG Chem, Ltd., Seoul 150-721 (KR)
(72) Inventor: LEE, Joo-Sung, Daejeon 305-770 (KR); KIM, In-Chul, Daejeon 302-726 (KR); RYU, Bo-Kyung, Daejeon 305-380 , (KR); KIM, Jong-Hun, Daejeon 302-120 (KR)
(74) Representative: Goddar, Heinz J.
(86) International application number: PCT/KR2011/009390
(87) International publication number: WO 2013/005898

(56) References cited:
- KR-A- 20080 095 770
- KR-A- 20090 056 811
- KR-A- 20090 095 478
- KR-A- 20100 108 997
- KR-A- 20110 058 657
- KR-A- 20110 058 657
- US-A1- 2010 261 047
- US-A1- 2010 316 903

## Description

### TECHNICAL FIELD

The present disclosure relates to an electrode assembly for an electrochemical device using separators and an electrochemical device including the electrode assembly.

### BACKGROUND ART

This application claims priorities to Korean Patent Application Nos. 10-2011-0067226 and 10-2011-0128945 filed in the Republic of Korea on July 7, 2011 and December 5, 2012.

With the development of mobile device technologies and the increasing demand for mobile devices, demand for secondary batteries is rapidly growing. Among secondary batteries, lithium secondary batteries are widely used as energy sources for numerous electronic products, including various types of mobile devices, due to their high energy density and operating voltage and excellent shelf and cycle life characteristics.

A general secondary battery is fabricated by laminating or winding unit cells, each of which includes a cathode, an anode and a separator interposed between the cathode and the anode, accommodating the laminated or wound unit cells in a metal can or a laminate sheet case, and injecting or impregnating an electrolyte solution thereinto.

Improvement of safety is one of the main challenging research subjects in the field of secondary batteries. For example, abnormal operating states of secondary batteries, such as internal short circuits, overcharged states above the allowable current and voltage limits, exposure to high temperatures, and deformation by falling down or external impacts, may cause an increase in the internal temperature and pressure of the secondary batteries, which may pose the danger of fire or explosion.

A very serious safety problem in batteries including separators is the occurrence of internal short circuits caused by shrinkage or breakage of the separators when the batteries are exposed to high temperatures. Considerable research efforts have been directed towards identifying the causes of internal short circuits in batteries and proposing solutions to avoid internal short circuits.

Porous polymer films, such as porous polyethylene and polypropylene films, are used as separators for secondary batteries. Such separators are inexpensive and highly resistant to chemicals, which are advantageous in terms of operating states of batteries, but are likely to shrink in hot atmospheres. Under such circumstances, introduction of organic-inorganic composite layers into separators has been presented as an approach to improve the heat resistance of the separators.

Electrode assemblies constituting secondary batteries have a cathode/separator/anode structure and are broadly classified into jelly-roll (i.e. winding) and stack (i.e. laminate) types by their structure. A jelly-roll type electrode assembly is constructed by producing cathodes and anodes, interposing separators between the anodes and the cathodes, and helically winding the electrode structures. Each of the cathodes and the anodes is produced by coating an electrode active material, etc. on a metal foil as a current collector, and a series of subsequent processing steps, including drying, pressing and cutting into bands with desired width and length. The jelly-roll type electrode assembly is preferably used for the fabrication of a cylindrical battery but is not suitable for use in the fabrication of a prismatic or pouch type battery because locally concentrated stress causes peeling of the electrode active materials or repeated expansion and contraction during charge and discharge causes deformation of the battery.

On the other hand, a stack type electrode assembly has a sequentially laminated structure of a plurality of unit cells, each of which includes a cathode and an anode. This structure has an advantage in that it is easy to obtain a prismatic shape, but it is disadvantageously troublesome and complicated to construct. Further, when an impact is applied to the assembly, the electrodes tend to be pushed and are thus short-circuited.

In attempts to solve such problems, advanced stack-folding type electrode assemblies, which are mixed forms of jelly-roll type and stack type electrode assemblies, have been developed in which full cells, each of which has a cathode/separator/anode structure whose unit size is constant, or bicells, each of which has a cathode (or anode)/separator/anode (or cathode)/separator/cathode (or anode), are folded using an elongated separation film. Such stack-folding type electrode assemblies are disclosed, for example, in Korean Unexamined Patent Publication Nos. 2001-82058, 2001-82059 and 2001-82060, which were filed by the present applicant.

For better heat resistance, these electrode assemblies can employ separators into which an organic-inorganic composite layer is introduced. However, the use of such separators may be problematic because of increased electrical resistance.

US2010261047 discloses an electrochemical device including a plurality of unit cells, each having a first separator and a cathode and an anode positioned at both sides of the first separator, and a continuous single second separator interposed between adjacent unit cells in correspondence with each other in a laminated pattern and arranged to surround each unit cell, the first and second separators comprising a porous substrate and coating layers formed on both surfaces of the porous substrates and made of a mixture of a plurality of inorganic particles and a binder polymer.

### DISCLOSURE

### Technical Problem

The present disclosure is designed to solve the problems of the prior art, and therefore it is an object of the present disclosure to provide an electrode assembly including separators with reduced electrical resistance.

### Technical Solution

According to an aspect of the present disclosure, there is provided an electrode assembly having a structure in which a plurality of unit cells are bonded to one surface of a first separator whose length is greater than width and are stacked in a zigzag pattern or wound sequentially,wherein the first separator comprises a porous polyolefin substrate and a first porous electrode adhesive layer on one surface of the porous polyolefin substrate, to which electrodes of the unit cells are adhered, formed at only one surface thereof to which the unit cells are bonded and comprising a mixture of inorganic particles and a binder polymer, and wherein each of the unit cells comprises a second separator which comprises a porous polyolefin substrate and second porous electrode adhesive layers on both surfaces of the porous polyolefin substrate, to which electrodes of the unit cell are adhered, formed at both surfaces thereof and comprising a mixture of inorganic particles and a binder polymer,wherein the porous polyolefin substrate is made of a polymer selected from the group consisting of polyethylene, polypropylene and polybutylene. Each of the unit cells may be a full cell including opposite electrodes with different structures. Each of the unit cells may be a bicell including opposite electrodes with the same structure.

As the inorganic particles of the porous electrode adhesive layers, there may be used, for example, inorganic particles having a dielectric constant of at least 5 and inorganic particles having the ability to transport lithium ions.

The inorganic particles having a dielectric constant of at least 5 are preferably selected from the group consisting of BaTiO₃, Pb(Zrₓ,Ti₁₋ₓ)O₃ (PZT, 0 < x < 1), Pb₁₋ₓLaₓZr_{1-y}Ti_{y}O₃ (PLZT, 0 < x < 1, 0 < y < 1), (1-x)Pb(Mg_{1/3}Nb_{2/3})O₃₋ₓPbTiO₃ (PMN-PT, 0 < x < 1), hafnia (HfO₂), SrTiO₃, SnO₂, CeO₂, MgO, NiO, CaO, ZnO, ZrO₂, SiO₂, Y₂O₃, Al₂O₃, SiC and TiO₂ particles.

The inorganic particles having the ability to transport lithium ions are preferably selected from the group consisting of lithium phosphate (Li₃PO₄) particles, lithium titanium phosphate (LiₓTi_{y}(PO₄)₃, 0 < x < 2, 0 < y < 3) particles, lithium aluminum titanium phosphate (LiₓAl_{y}Ti_{z}(PO₄)₃, 0 < x < 2, 0 < y < 1, 0 < z < 3) particles, (LiAlTiP)ₓOy type glass (0 < x < 4, 0 < y < 13) particles, lithium lanthanum titanate (LiₓLa_{y}TiO₃, 0 < x < 2, 0 < y < 3) particles, lithium germanium thiophosphate (LiₓGe_{y}P_{z}S_{w}, 0 < x < 4, 0 < y < 1, 0 < z < 1, 0 < w < 5) particles, lithium nitride (LiₓNy, 0 < x < 4, 0 < y < 2) particles, SiS₂ type glass (LiₓSi_{y}S_{z}, 0 < x < 3, 0 < y < 2, 0 < z < 4) particles, and P₂S₅ type glass (LiₓP_{y}S_{z}, 0 < x < 3, 0 < y < 3, 0 < z < 7) particles.

The binder polymer of each of the porous electrode adhesive layers is not particularly limited, and examples thereof include polyvinylidene fluoride-co-hexafluoropropylene, polyvinylidene fluoride-co-trichloroethylene, polymethyl methacrylate, polybutyl acrylate, polyacrylonitrile, polyvinylpyrrolidone, polyvinyl acetate, polyvinyl alcohol, polyethylene-co-vinyl acetate, polyethylene oxide, polyarylate, cellulose acetate, cellulose acetate butyrate, cellulose acetate propionate, cyanoethylpullulan, cyanoethyl polyvinyl alcohol, cyanoethyl cellulose, cyanoethyl sucrose, pullulan, carboxymethyl cellulose, and low molecular weight compounds having a molecular weight of 10,000 g/mol or lower.

The weight ratio of the inorganic particles to the binder polymer in each of the porous electrode adhesive layers is preferably from 10:90 to 99:1.

According to another aspect of the present disclosure, there is provided an electrochemical device including the electrode assembly. According to yet another aspect of the present disclosure, there is provided a secondary battery including the electrode assembly and a case sealing and accommodating the electrode assembly together with an electrolyte solution.

### Advantageous Effects

The separators, each of which includes porous electrode adhesive layers, to which electrodes are adhered, formed at both surfaces thereof, and the separator including a porous electrode adhesive layer, to which electrodes are adhered, formed at one surface thereof are separately used in the electrode assembly of the present disclosure. This reduces the electrical resistance of the separators, contributing to an improvement in the performance of the electrochemical device. In addition, the porous electrode adhesive layers are not exposed outside the electrode assembly of the present disclosure. Due to this structure, the inorganic particles can be prevented from escaping from the porous electrode adhesive layers.

### DESCRIPTION OF DRAWINGS

The accompanying drawings illustrate preferred embodiments of the present disclosure and, together with the foregoing disclosure, serve to provide further understanding of the technical spirit of the present disclosure. However, the present disclosure is not to be construed as being limited to the drawings.
FIG. 1 is a cross-sectional view schematically illustrating the construction of an electrode assembly using full cells as unit cells before stack folding according to a preferred embodiment of the present disclosure.
FIG. 2 is a cross-sectional view schematically illustrating the construction of an electrode assembly using bicells as unit cells before stack folding according to a preferred embodiment of the present disclosure before stack folding.
FIG. 3 is a cross-sectional view schematically illustrating the structure of a stack-folding type electrode assembly using full cells as unit cells according to a preferred embodiment of the present disclosure.

### Explanation of reference numerals

10: First separator 11: Porous substrate
12: First porous electrode adhesive layer 20: Second separators
21: Porous substrates 22: Second porous electrode adhesive layers
100: Winding type electrode assembly using full cells
110, 120, 130, 140, 150: Full cells
111: Anodes 112: Cathodes
200: Winding type electrode assembly using bicells
210, 220, 230, 240, 250: Bicells
211: Cathodes 212: Anodes

### BEST MODE

Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the spirit and scope of the disclosure at the time of filing the present application.

The present disclosure provides an electrode assembly having a structure in which a plurality of unit cells are bonded to one surface of a first separator whose length is greater than width and are stacked in a zigzag pattern or wound sequentially,wherein the first separator comprises a porous polyolefin substrate and a first porous electrode adhesive layer on one surface of the porous polyolefin substrate, to which electrodes of the unit cells are adhered, formed at only one surface thereof to which the unit cells are bonded and comprising a mixture of inorganic particles and a binder polymer, and wherein each of the unit cells comprises a second separator which comprises a porous polyolefin substrate and second porous electrode adhesive layers on both surfaces of the porous polyolefin substrate, to which electrodes of the unit cell are adhered, formed at both surfaces thereof and comprising a mixture of inorganic particles and a binder polymer,wherein the porous polyolefin substrate is made of a polymer selected from the group consisting of polyethylene, polypropylene and polybutylene. The first separator acts as a folding film to prevent short circuits between the adjacent unit cells, and the second separators act as separation films to prevent short circuits between cathodes and anodes in the unit cells.

Many methods are possible to assemble the unit cells including the second separators acting as separation films by using the first separator.

As an example, the electrode assembly may be constructed by arranging the plurality of unit cells at predetermined intervals on one surface of the first separator extending in the lengthwise direction, and winding the first separator together with the unit cells in one direction. The electrode assembly thus constructed has a structure in which the unit cells are inserted into a space defined by the wound first separator. As another example, the electrode assembly may be constructed by arranging the plurality of unit cells at predetermined intervals on both surfaces of the first separator extending in the lengthwise direction, and winding the first separator together with the unit cells in one direction. The electrode assembly thus constructed has a structure in which the unit cells are inserted into a space defined by the wound first separator. The intervals between the arranged unit cells and the polarities of the outermost electrodes of the unit cells are selected such that the electrodes of the upper cells in contact with the first separator have polarities opposite to those of the electrodes of the lower cells in contact with the first separator. As an example, the intervals between the arranged unit cells and the polarities of the outermost electrodes of the unit cells may be selected such that the electrode assembly has a cathode/second separator/anode/first separator/cathode/second separator/anode/first separator/cathode··· structure.

As another example, the electrode assembly may be constructed by arranging the plurality of unit cells at predetermined intervals on one surface of the first separator extending in the lengthwise direction, and bending the first separator together with the unit cells in a zigzag configuration to arrange the unit cells between the bent portions of the first separator. The electrode assembly thus constructed has a structure in which the unit cells are inserted into the bent and laminated portions of the first separator. As another example, the electrode assembly may be constructed by arranging the plurality of unit cells at predetermined intervals on both surfaces of the first separator extending in the lengthwise direction, and bending the first separator together with the unit cells in a zigzag configuration to arrange the unit cells between the bent portions of the first separator. The electrode assembly thus constructed has a structure in which the unit cells are inserted into the bent and laminated portions of the first separator. The intervals between the arranged unit cells and the polarities of the outermost electrodes of the unit cells are selected such that the electrodes of the upper cells in contact with the first separator have polarities opposite to those of the electrodes of the lower cells in contact with the first separator. As an example, the intervals between the arranged unit cells and the polarities of the outermost electrodes of the unit cells may be selected such that the electrode assembly has a cathode/second separator/anode/first separator/cathode/second separator/anode/first separator/cathode··· structure.

Electrode assemblies according to preferred embodiments of the present disclosure will now be explained in more detail with reference to the accompanying drawings.

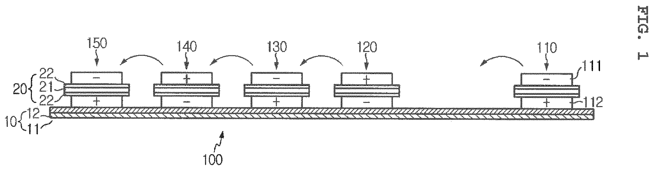

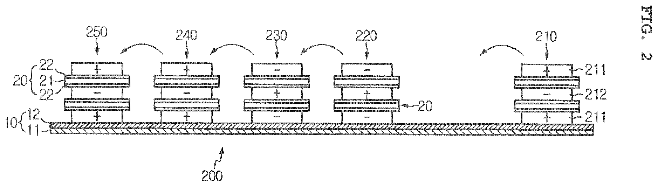

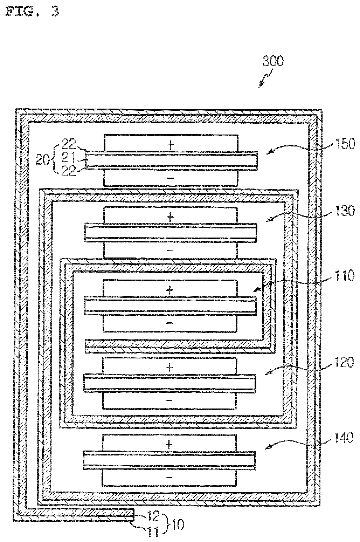

FIG. 1 is a cross-sectional view schematically illustrating the construction of an electrode assembly using full cells as unit cells before stack folding according to a preferred embodiment of the present disclosure. FIG. 2 is a cross-sectional view schematically illustrating the construction of an electrode assembly using bicells as unit cells before stack folding according to a preferred embodiment of the present disclosure. FIG. 3 is a cross-sectional view schematically illustrating the construction of a stack-folding type electrode assembly using full cells as unit cells according to a preferred embodiment of the present disclosure.

Referring first to FIG. 3, the stack-folding type electrode assembly 300 of the present disclosure has a structure in which a plurality of unit cells 110, 120, 130, 140 and 150 are bonded to one surface of a first separator 10 whose length is greater than width and are wound sequentially. The first separator 10 includes a first porous electrode adhesive layer 12, to which electrodes of the unit cells are adhered, formed at one surface thereof to which the unit cells are bonded. Each of the unit cells includes a second separator 20 including second porous electrode adhesive layers 22, to which electrodes of the unit cell are adhered, formed at both surfaces thereof.

Each of the porous electrode adhesive layer 12 of the first separator 10 and the porous electrode adhesive layers 22 of the second separators 20 includes a mixture of inorganic particles and a binder polymer. In each of the porous electrode adhesive layers, the binder polymer attaches (that is, connects and fixes) the inorganic particles to each other so as to maintain a state in which the inorganic particles are bound to each other. The binder polymer also functions to maintain a state in which the porous electrode adhesive layer is bound to a porous substrate. The binder polymer has good adhesion to an electrode active material of the electrode in contact with the porous electrode adhesive layer. The inorganic particles of the porous electrode adhesive layer are in substantial contact with each other and have a closest packed structure. Interstitial volumes created between the inorganic particles in contact with each other become pores of the porous electrode adhesive layer. The formation of the porous electrode adhesive layers makes the first separator and the second separators highly resistant to heat, contributing to enhanced stability of the separators, but the use of the binder polymer may increase the electrical resistance of the separators.

The stack-folding type electrode assembly of the present disclosure, which has the first separator, to which the unit cells are bonded, and the second separators included in the unit cells, can be constructed through two divided processes, i.e. a stack process for laminating the unit cells and a folding process for winding the unit cells. For the stack process, both surfaces of each of the second separators included in the unit cells are required to have good adhesion to the overlying electrodes. To meet this requirement, the porous electrode adhesive layers including the binder polymer are necessarily formed at both surfaces of each of the second separators. For the folding process, only one surface of the first separator, to which the unit cells are bonded, is required to have good adhesion to the electrodes of the unit cells. To meet this requirement, the porous electrode adhesive layer including the binder polymer is formed at only one surface of the first separator. The introduction of the porous electrode adhesive layer into only one surface of the first separator, to which the unit cells are bonded, contributes to a reduction in the amount of the binder polymer used, which can reduce the electrical resistance of the first separator and can improve the performance of an electrochemical device using the first separator to ensure high output of the electrochemical device. In the case of a stack-folding type electrode assembly using a separator that includes porous electrode adhesive layers, to which electrodes are adhered, formed at both surfaces thereof, the porous electrode adhesive layers are exposed outside the stack-folding type electrode assembly. As a result, inorganic particles may escape from the porous electrode adhesive layer, for example, in the course of inserting the electrode assembly into an external case, resulting in poor processability and performance. In contrast, according to the present disclosure, the porous electrode adhesive layer formed at only one surface of the first separator is not exposed outside the stack-folding type electrode assembly. Therefore, the inorganic particles can be prevented from escaping from the porous electrode adhesive layer.

Each of the unit cells may be a full cell including opposite electrodes with different structures. Referring to FIG. 1, the full cells 110, 120, 130, 140 and 150, each of which includes an anode 111, a second separator 20 and a cathode 112 laminated in this order, are arranged at predetermined intervals on the surface of the first separator 10 and are laminated to construct the stack-folding type electrode assembly.

Alternatively, each of the unit cells may be a bicell including opposite electrodes with the same structure. Referring to FIG. 2, bicells 210, 220, 230, 240 and 250, each of which includes a cathode 211, a second separator 20, an anode 212, a second separator 20 and a cathode 211 laminated in this order or an anode 212, a second separator 20, a cathode 211, a second separator 20 and an anode 212 laminated in this order, are arranged at constant intervals on the surface of the first separator 10 and are laminated to construct the stack-folding type electrode assembly. FIG. 2 illustrates each of the bicells as a laminate of three electrodes. However, the number of the electrodes laminated in each of the bicells is not limited. For example, five or seven electrodes may be laminated in each of the bicells.

The first separator is produced by forming the porous electrode adhesive layer, to which electrodes of the unit cells are adhered, on a porous substrate. Each of the second separators is produced by forming the porous electrode adhesive layer, to which electrodes of the unit cell are adhered, on both surfaces of a porous substrate. Each of the porous substrates may be a porous polyolefin substrate. The porous polyolefin substrate is selected from the group consisting of polyethylene, polypropylene, polybutylene and polypentene.

The inorganic particles used in the porous electrode adhesive layers of the separators are not specially limited so long as they are electrochemically stable. In other words, the inorganic particles can be used without particular limitation in the present disclosure if they do not undergo oxidation and/or reduction in an operating voltage range applied to an electrochemical device (for example, 0-5 V for Li/Li⁺). In particular, the use of inorganic particles having the ability to transport ions can improve the conductivity of ions in an electrochemical device, leading to an improvement in the performance of the electrochemical device.

The use of inorganic particles having a high dielectric constant can contribute to an increase in the degree of dissociation of an electrolyte salt, for example, a lithium salt, in a liquid electrolyte to improve the ionic conductivity of the electrolyte solution.

For these reasons, it is preferred that the inorganic particles are selected from inorganic particles having a dielectric constant of at least 5, preferably at least 10, inorganic particles having the ability to transport lithium ions, and mixtures thereof.

Non-limiting examples of inorganic particles having a dielectric constant of at least 5 include BaTiO₃, Pb(Zrₓ,Ti₁₋ₓ)O₃ (PZT, 0 < x < 1), Pb₁₋ₓLaₓZr_{1-y}Ti_{y}O₃ (PLZT, 0 < x < 1, 0 < y < 1), (1-x)Pb(Mg_{1/3}Nb_{2/3})O₃₋ₓPbTiO₃ (PMN-PT, 0 < x < 1), hafnia (HfO₂), SrTiO₃, SnO₂, CeO₂, MgO, NiO, CaO, ZnO, ZrO₂, Y₂O₃, Al₂O₃, SiC and TiO₂ particles. These inorganic particles may be used alone or as a mixture of two or more kinds thereof.

Particularly preferred are BaTiO₃, Pb(ZrₓTi₁₋ₓ)O₃ (PZT, 0 < x < 1), Pb₁₋ₓLaₓZr_{1-y}Ti_{y}O₃ (PLZT, 0 < x < 1, 0 < y < 1), (1-x)Pb(Mg_{1/3}Nb_{2/3})O₃-xPbTiO₃(PMN-PT, 0 < x < 1) and hafnia (HfO₂) whose dielectric constants are 100 or higher that have piezoelectricity to protect both electrodes from internal short circuits when an external impact is applied, ensuring improved safety of an electrochemical device. Piezoelectricity is a phenomenon in which charges are created as a result of tension or compression under a certain pressure to generate a potential difference between opposite sides. The use of a mixture of the inorganic particles having a high dielectric constant and the inorganic particles having the ability to transport lithium ions can produce enhanced synergistic effects.

The inorganic particles having the ability to transport lithium ions refer to those that contain lithium atoms and have the function of transferring lithium ions without storing the lithium. The inorganic particles having the ability to transport lithium ions contain defects in their structure through which lithium ions can be transferred and moved. The presence of the defects can improve the conductivity of lithium ions in a battery, leading to improved battery performance. Non-limiting examples of the inorganic particles having the ability to transport lithium ions include lithium phosphate (Li₃PO₄) particles, lithium titanium phosphate (LiₓTi_{y}(PO₄)₃, 0 < x < 2, 0 < y < 3) particles, lithium aluminum titanium phosphate (LiₓAl_{y}Ti_{z}(PO₄)₃, 0 < x < 2, 0 < y < 1, 0 < z < 3) particles, (LiAlTiP)ₓO_{y} type glass (0 < x < 4, 0 < y < 13) particles such as 14Li₂O-9Al₂O₃-38TiO₂-39P₂O₅ particles, lithium lanthanum titanate (LiₓLa_{y}TiO₃, 0 < x < 2, 0 < y < 3) particles, lithium germanium thiophosphate (LiₓGe_{y}P_{z}S_{w}, 0 < x < 4 , 0 < y < 1, 0 < z < 1, 0 < w < 5) particles such as Li_{3.25}Ge_{0.25}P_{0.75}S₄ particles, lithium nitride (LiₓN_{y}, 0 < x < 4, 0 < y < 2) particles such as Li₃N particles, SiS₂ type glass (LiₓSi_{y}S_{z}, 0 < x < 3, 0 < y < 2, 0 < z < 4) particles such as L₁₃PO₄-Li₂S-SiS₂ particles, and P₂S₅ type glass (LiₓP_{y}S_{z}, 0 < x < 3, 0 < y < 3, 0 < z < 7) particles such as LiI-Li₂S-P₂S₅ particles. These inorganic particles may be used alone or as a mixture thereof.

The binder polymer of each of the porous electrode adhesive layers is not particularly limited, and examples thereof include polyvinylidene fluoride-co-hexafluoropropylene, polyvinylidene fluoride-co-trichloroethylene, polymethyl methacrylate, polybutyl acrylate, polyacrylonitrile, polyvinylpyrrolidone, polyvinyl acetate, polyvinyl alcohol, polyethylene-co-vinyl acetate, polyethylene oxide, polyarylate, cellulose acetate, cellulose acetate butyrate, cellulose acetate propionate, cyanoethylpullulan, cyanoethyl polyvinyl alcohol, cyanoethyl cellulose, cyanoethyl sucrose, pullulan, carboxymethyl cellulose, and low molecular weight compounds having a molecular weight of 10,000 g/mol or lower.

The weight ratio of the inorganic particles to the binder polymer in each of the porous electrode adhesive layers is preferably from 10:90 to 99:1.

Each of the cathodes used in the electrode assembly of the present disclosure includes a cathode current collector and a cathode active material layer. The cathode is produced by binding the cathode active material layer to the cathode current collector. The cathode active material layer includes, as a major component, at least one lithium intercalation material selected from lithiated manganese oxides, lithiated cobalt oxides, lithiated nickel oxides and composite oxides thereof. The cathode current collector is an aluminum foil, a nickel foil or a combination thereof. Each of the anodes used in the electrode assembly of the present disclosure includes an anode current collector and an anode active material layer. The anode is produced by binding the anode active material layer to the anode current collector. The anode active material layer includes, as a major component, at least one lithium intercalation material selected from lithium metal, lithium alloys, carbon, graphite, petroleum coke, activated carbon, and other carbon materials. The anode current collector is a copper foil, a gold foil, a nickel foil, a copper alloy foil or a combination thereof.

The present disclosure also provides an electrochemical device including the electrode assembly. The electrochemical device includes all devices in which electrochemical reactions occur. Specific examples of such electrochemical devices include all kinds of primary batteries, secondary batteries, fuel cells, solar cells, and capacitors such as supercapacitors. Particularly preferred are lithium secondary batteries, including lithium metal secondary batteries, lithium ion secondary batteries, lithium polymer secondary batteries and lithium ion polymer secondary batteries.

The present disclosure also provides a secondary battery including the electrode assembly and a case sealing and accommodating the electrode assembly together with an electrolyte solution.

The electrolyte solution includes a lithium salt as an electrolyte. The lithium salt may be any of those commonly used in the art. For example, the anion of the lithium salt may be selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻ (CF₃)₆P⁻, CF₃SO₃⁻, CF₃CF₂SO₃⁻, (CF₃SO₂)₂N⁻, (FSO₂)₂N⁻, CF₃CF₂ (CF₃)₂CO⁻, (CF₃SO₂)₂CH⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The electrolyte solution includes an organic solvent. The organic solvent may be any of those commonly used in the art. Representative examples of organic solvents suitable for use in the electrolyte solution include propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, γ-butyrolactone, propylene sulfite and tetrahydrofuran (THF). These organic solvents may be used alone or as a mixture of two or more thereof. Ethylene carbonate and propylene carbonate, which are highly viscous and high dielectric constant cyclic carbonates, are particularly preferred because of their good ability to dissociate the lithium salt present in the electrolyte solution. A mixture of such a cyclic carbonate with a linear carbonate whose viscosity and dielectric constant are low, such as dimethyl carbonate or diethyl carbonate, in a suitable ratio is more preferred because it can be used to prepare an electrolyte solution having a high electrical conductivity.

The electrolyte solution may optionally further include one or more additives known in the art, such as an overcharge preventing agent.

Any suitable battery case commonly used in the art may be employed in the battery of the present disclosure. There is no restriction on the shape of the battery case according to the intended application of the battery. For example, the battery case may be a cylindrical or prismatic can. Alternatively, the battery case may be a pouch or a coin.

Hereinafter, an explanation will be given of a method for constructing a stack folding type electrode assembly for a secondary battery according to a preferred embodiment of the present disclosure.

The electrode assembly 100 illustrated in FIG. 1 and the electrode assembly 200 illustrated in FIG. 2 are prepared. The electrode assembly 300 illustrated in FIG. 3 can be constructed from each of the electrode assemblies 100 and 200 by stack folding. Specifically, the electrode assembly 100 or 200 is folded in such a direction that the first separator 10 wraps the full cells or the bicells and so as to have a laminate structure in which the full cells or the bicells are aligned to correspond to each other.

The arrows in FIGS. 1 and 2 indicate the folding direction of each of the electrode assemblies to construct the stack-folding type electrode assembly illustrated in FIG. 3.

First, folding of each of the electrode assemblies starts from the right side in the direction of the arrow shown in the corresponding figure. The top electrode 111 of the full cell 110 or the top electrode 211 of the bicell 210 is brought into contact with the first separator 10. Between the full cell 110 or the bicell 210 and the adjacent full cell 120 or the adjacent bicell 220, there is an area where no full cell or bicell is arranged and whose width substantially corresponds to that of the full cell 110 or the bicell 210.

Thereafter, the electrode assembly is continuously folded in the arrow direction. After the continuous folding, all full cells 110, 120, 130, 140 and 150 or all bicells 210, 220, 230, 240 and 250 are wrapped in the first separator 10, the first separator 10 is interposed between the adjacent full cells or bicells, and the full cells or the bicells are laminated and aligned to correspond to each other (stack-folding). The intervals between the adjacent full cells 120, 130, 140 and 150 or the adjacent bicells 220, 230, 240 and 250 after the first full cell 110 or the bicell 210 correspond to the total heights of the previously laminated cells. Accordingly, it will be apparent to those skilled in the art that the intervals should be increased gradually as the folding proceeds in the stack-folding process. It should be understood by those skilled in the art that, for descriptive convenience, FIGS. 1 and 2 illustrate that the unit cells are spaced at uniform intervals.

The cross section of the electrode assembly 300 constructed from the electrode assembly 100 of FIG. 1 employing the full cells by stack folding is schematically illustrated in FIG. 3.

### MODE FOR DISCLOSURE

Although the present disclosure has been described herein with reference to the foregoing embodiments and the accompanying drawings, it is not limited to the embodiments and the drawings. Accordingly, those skilled in the art to which the present disclosure pertains will appreciate that various variations and modifications are possible within the scope of the appended claims.

### EXAMPLES

### Example 1: Stack-folding type electrode assembly using separator as folding film including porous electrode adhesive layer formed at one surface thereof

Polyvinylidene fluoride-co-chlorotrifluoroethylene (PVdF-CTFE) and cyanoethylpullulan in a weight ratio of 10:2 were added to and dissolved in acetone at 50 °C for about 12 hr. To the polymer solution was added Al₂O₃ powder in such an amount that the weight ratio of the polymers to the inorganic particles was 5:95. The inorganic particles were crushed and dispersed in the solution by ball milling for 12 hr to prepare a slurry. The inorganic particles of the slurry had an average particle size of 600 nm.

The slurry was coated to a thickness of 10 µm on one surface of a 16 µm thick porous polyolefin membrane (C210, Celgard) as a substrate to produce a first separator. The first separator had a Gurley number of 849 sec/100 cc.

Separately, the slurry was coated to a thickness of 10 µm on both surfaces of a 16 µm thick porous polyolefin membrane (C210, Celgard) as a substrate to produce a second separator. The second separator had a Gurley number of 1,297 sec/100 cc, which is higher than that of the first separator.

The second separator was interposed between a cathode and an anode, followed by bonding at a temperature of 100 °C to produce a stacked fullcell. The stacked fullcell was bonded to the coated surface of the first separator, followed by folding to construct an electrode assembly.

### Comparative Example 1: Stack-folding type electrode assembly using separator as folding film including porous electrode adhesive layers formed at both surfaces thereof

Polyvinylidene fluoride-co-chlorotrifluoroethylene (PVdF-CTFE) and cyanoethylpullulan in a weight ratio of 10:2 were added to and dissolved in acetone at 50 °C for about 12 hr. To the polymer solution was added Al₂O₃ powder in such an amount that the weight ratio of the polymers to the inorganic particles was 5:95. The inorganic particles were crushed and dispersed in the solution by ball milling for 12 hr to prepare a slurry. The inorganic particles of the slurry had an average particle size of 600 nm.

The slurry was coated to a thickness of 10 µm on both surfaces of a 16 µm thick porous polyolefin membrane (C210, Celgard) as a substrate to produce a separator. The separator had a Gurley number of 1,297 sec/100 cc. Another separator was produced by the same procedure as described above.

One of the separators was interposed between a cathode and an anode, followed by bonding at a temperature of 100 °C to produce a stacked fullcell. The stacked fullcell was bonded to the coated surface of the other separator, followed by folding to construct an electrode assembly.

### Test Example 1: Measurement of resistances of the separator including porous electrode adhesive layer formed at one surface thereof and the separator including porous electrode adhesive layers formed at both surfaces thereof

An electrolyte solution was injected into the first separator produced in Example 1, which includes a porous electrode adhesive layer formed at one surface thereof, and one of the separators produced in Comparative Example 1, which includes porous electrode adhesive layers formed at both surfaces thereof. The resistance values of the separators, into which the electrolyte solution was injected, were measured and are shown in Table 1.

**TABLE 1**

| | Separator including porous electrode adhesive layer formed at one surface thereof | Separator including porous electrode adhesive layers formed at both surfaces thereof |
|---|---|---|
| Resistance (Ω) | 1.26 | 1.80 |

The results in Table 1 show that the first separator including a porous electrode adhesive layer formed at one surface thereof had a lower resistance.

### Test Example 2: Measurement of battery performance of the stack-folding type electrode assemblies constructed in Example 1 and Comparative Example 1

The outputs of the stack-folding type electrode assemblies constructed in Example 1 and Comparative Example 1 at various states of charge (SOC) for 2 sec were measured and are shown in Table 2.

**TABLE 2**

| SOC | Example 1 | Comparative Example 1 |
|---|---|---|
| 95% | 78 W | 76 W |
| 50% | 62 W | 59 W |
| 30% | 50 W | 47 W |

The results in Table 2 show that the electrode assembly of Example 1 had better output characteristics at all states of charge (SOC) than the electrode assembly of Comparative Example 1.

## Claims

1. An electrode assembly having a structure in which a plurality of unit cells are bonded to one surface of a first separator whose length is greater than width and are stacked in a zigzag pattern or wound sequentially,
wherein the first separator comprises a porous polyolefin substrate and a first porous electrode adhesive layer on one surface of the porous polyolefin substrate, to which electrodes of the unit cells are adhered, formed at only one surface thereof to which the unit cells are bonded and comprising a mixture of inorganic particles and a binder polymer, and
wherein each of the unit cells comprises a second separator which comprises a porous polyolefin substrate and second porous electrode adhesive layers on both surfaces of the porous polyolefin substrate, to which electrodes of the unit cell are adhered, formed at both surfaces thereof and comprising a mixture of inorganic particles and a binder polymer,
wherein the porous polyolefin substrate is made of a polymer selected from the group consisting of polyethylene, polypropylene and polybutylene.

2. The electrode assembly according to claim 1, wherein each of the unit cells is a full cell comprising opposite electrodes with different structures.

3. The electrode assembly according to claim 1, wherein each of the unit cells is a bicell comprising opposite electrodes with the same structure.

4. The electrode assembly according to claim 1, wherein the inorganic particles of the first porous electrode adhesive layer and the inorganic particles of the second porous electrode adhesive layers are each independently selected from the group consisting of inorganic particles having a dielectric constant of at least 5, inorganic particles having the ability to transport lithium ions, and mixtures thereof.

5. The electrode assembly according to claim 4, wherein the inorganic particles having a dielectric constant of at least 5 are selected from the group consisting of BaTiO₃, Pb(Zrₓ,Ti₁₋ₓ)O₃ (PZT, 0 < x < 1), Pb₁₋ₓLaₓZr_{1-y}Ti_{y}O₃ (PLZT, 0 < x < 1, 0 < y < 1), (1-x)Pb(Mg_{1/3}Nb_{2/3})O₃₋ₓPbTiO₃ (PMN-PT, 0 < x < 1), hafnia (HfO₂), SrTiO₃, SnO₂, CeO₂ , MgO, NiO, CaO, ZnO, ZrO₂, SiO₂, Y₂O₃, Al₂O₃, SiC, TiO₂ particles, and mixtures thereof.

6. The electrode assembly according to claim 4, wherein the inorganic particles having the ability to transport lithium ions are selected from the group consisting of lithium phosphate (Li₃PO₄) particles, lithium titanium phosphate (Liₓ₋Ti_{y}(PO₄)₃, 0 < x < 2, 0 < y < 3) particles, lithium aluminum titanium phosphate (LiₓAl_{y}Ti_{z}(PO₄)₃, 0 < x < 2, 0 < y < 1, 0 < z < 3) particles, (LiAlTiP)ₓO_{y} type glass (0 < x < 4, 0 < y < 13) particles, lithium lanthanum titanate (LiₓLa_{y}TiO₃, 0 < x < 2, 0 < y < 3) particles, lithium germanium thiophosphate (LiₓGe_{y}P_{z}S_{w}, 0 < x < 4, 0 < y < 1, 0 < z < 1, 0 < w < 5) particles, lithium nitride (LiₓN_{y}, 0 < x < 4, 0 < y < 2) particles, SiS₂ type glass (LiₓSiyS_{z}, 0 < x < 3, 0 < y < 2, 0 < z < 4) particles, P₂S₅ type glass (LiₓP_{y}S_{z}, 0 < x < 3, 0 < y < 3, 0 < z < 7) particles, and mixtures thereof.

7. The electrode assembly according to claim 1, wherein the binder polymer of the first porous electrode adhesive layer and the binder polymer of the second porous electrode adhesive layers are each independently selected from the group consisting of polyvinylidene fluoride-co-hexafluoropropylene, polyvinylidene fluoride-co-trichloroethylene, polymethyl methacrylate, polybutyl acrylate, polyacrylonitrile, polyvinylpyrrolidone, polyvinyl acetate, polyvinyl alcohol, polyethylene-co-vinyl acetate, polyethylene oxide, polyarylate, cellulose acetate, cellulose acetate butyrate, cellulose acetate propionate, cyanoethylpullulan, cyanoethyl polyvinyl alcohol, cyanoethyl cellulose, cyanoethyl sucrose, pullulan, carboxymethyl cellulose, and low molecular weight compounds having a molecular weight of 10,000 g/mol or lower.

8. The electrode assembly according to claim 1, wherein the weight ratio of the inorganic particles to the binder polymer in the first porous electrode adhesive layer and the weight ratio of the inorganic particles to the binder polymer in the second porous electrode adhesive layers are each independently from 10:90 to 99:1.

9. An electrochemical device comprising the electrode assembly according to claim 1.

10. A secondary battery comprising the electrode assembly according to claim 1 and a case sealing and accommodating the electrode assembly together with an electrolyte solution.

## Patentansprüche

1. Elektrodenanordnung mit einer Struktur, bei der eine Vielzahl von Einheitszellen an eine Oberfläche eines ersten Separators angebunden sind, dessen Länge größer ist als seine Breite, und welche in einem Zickzack-Muster gestapelt sind oder sequentiell gewickelt sind,
wobei der erste Separator ein poröses Polyolefinsubstrat und eine erste poröse Elektrodenanhaftschicht auf einer Oberfläche des porösen Polyolefinsubstrats umfasst, an die Elektroden der Einheitszellen angeheftet sind, gebildet an lediglich einer Oberfläche desselben, an die die Einheitszellen angebunden sind, und umfassend eine Mischung aus anorganischen Teilchen und einem Bindemittelpolymer, und
wobei jede der Einheitszellen einen zweiten Separator umfasst, der ein poröses Polyolefinsubstrat und zweite poröse Elektrodenanhaftschichten auf beiden Oberflächen des porösen Polyolefinsubstrats umfasst, an die Elektroden der Einheitszelle angeheftet sind, gebildet an beiden Oberflächen desselben, und umfassend eine Mischung aus anorganischen Teilchen und einem Bindemittelpolymer,
wobei das poröse Polyolefinsubstrat aus einem Polymer ausgewählt aus der Gruppe bestehend aus Polyethylen, Polypropylen und Polybutylen hergestellt ist.

2. Elektrodenanordnung nach Anspruch 1, wobei jede der Einheitszellen eine vollständige Zelle, umfassend entgegengesetzte Elektroden mit unterschiedlichen Strukturen, ist.

3. Elektrodenanordnung nach Anspruch 1, wobei jede der Einheitszellen eine Bizelle, umfassend entgegengesetzte Elektroden mit der gleichen Struktur, ist.

4. Elektrodenanordnung nach Anspruch 1, wobei die anorganischen Teilchen der ersten porösen Elektrodenanhaftschicht und die anorganischen Teilchen der zweiten porösen Elektrodenanhaftschichten jeweils unabhängig ausgewählt sind aus der Gruppe bestehend aus anorganischen Teilchen mit einer Dielektrizitätskonstanten von wenigstens 5, anorganischen Teilchen mit der Fähigkeit zum Transport von Lithiumionen und Mischungen derselben.

5. Elektrodenanordnung nach Anspruch 4, wobei die anorganischen Teilchen mit einer Dielektrizitätskonstanten von wenigstens 5 ausgewählt sind aus der Gruppe bestehend aus Teilchen von BaTiO₃, Pb(Zrₓ,Ti₁₋ₓ)O₃ (PZT, 0 < x < 1), Pb₁₋ₓLaₓZr_{1-y}Ti_{y}O₃ (PLZT, 0 < x < 1, 0 < y < 1), (1-x)Pb(Mg_{1/3}Nb_{2/3})O₃₋ₓPbTiO₃ (PMN-PT, 0 < x < 1), Hafniumoxid (HfO₂), SrTiO₃, SnO₂, CeO₂, MgO, NiO, CaO, ZnO, ZrO₂, SiO₂, Y₂O₃, Al₂O₃, SiC, TiO₂ und Mischungen derselben.

6. Elektrodenanordnung nach Anspruch 4, wobei die anorganischen Teilchen mit der Fähigkeit zum Transport von Lithiumionen ausgewählt sind aus der Gruppe bestehend aus Lithiumphosphat-Teilchen (Li₃PO₄), Lithiumtitanphosphat-Teilchen (Liₓ₋Ti_{y}(PO₄)₃, 0 < x < 2, 0 < y < 3), Lithiumaluminiumtitanphosphat-Teilchen (LiₓAl_{y}Ti_{z}(PO₄)₃, 0 < x < 2, 0 < y < 1, 0 < z < 3), glasartigen Teilchen von (LiAlTiP)ₓOy (0 < x < 4, 0 < y < 13), Lithiumlanthantitanat-Teilchen (LiₓLa_{y}TiO₃, 0 < x < 2, 0 < y < 3), Lithiumgermaniumthiophosphat-Teilchen (LiₓGe_{y}P_{z}S_{w}, 0 < x < 4, 0 < y < 1, 0 < z < 1, 0 < w < 5), Lithiumnitrid-Teilchen (LiₓNy, 0 < x < 4, 0 < y < 2), glasartigen Teilchen von SiS₂ (LiₓSiyS_{z}, 0 < x < 3, 0 < y < 2, 0 < z < 4), glasartigen Teilchen von P₂S₅ (LiₓPyS_{z}, 0 < x < 3, 0 < y < 3, 0 < z < 7) und Mischungen derselben.

7. Elektrodenanordnung nach Anspruch 1, wobei das Bindemittelpolymer der ersten porösen Elektrodenanhaftschicht und das Bindemittelpolymer der zweiten porösen Elektrodenanhaftschichten jeweils unabhängig ausgewählt sind aus der Gruppe bestehend aus Polyvinylidenfluorid-co-hexafluorpropylen, Polyvinylidenfluorid-co-trichlorethylen, Polymethylmethacrylat, Polybutylacrylat, Polyacrylnitril, Polyvinylpyrrolidon, Polyvinylacetat, Polyvinylalkohol, Polyethylen-co-vinylacetat, Polyethylenoxid, Polyarylat, Celluloseacetat, Celluloseacetatbutyrat, Celluloseacetatpropionat, Cyanoethylpullulan, Cyanoethylpolyvinylalkohol, Cyanoethylcellulose, Cyanoethylsaccharose, Pullulan, Carboxymethylcellulose und niedermolekulargewichtigen Verbindungen mit einem Molekulargewicht von 10.000 g/mol oder weniger.

8. Elektrodenanordnung nach Anspruch 1, wobei das Gewichtsverhältnis der anorganischen Teilchen zu dem Bindemittelpolymer in der ersten porösen Elektrodenanhaftschicht und das Gewichtsverhältnis der anorganischen Teilchen zu dem Bindemittelpolymer in den zweiten porösen Elektrodenanhaftschichten jeweils unabhängig von 10:90 bis 99:1 ist.

9. Elektrochemische Vorrichtung, umfassend die Elektrodenanordnung nach Anspruch 1.

10. Sekundärbatterie, umfassend die Elektrodenanordnung nach Anspruch 1 und ein Gehäuse, das die Elektrodenanordnung zusammen mit einer Elektrolytlösung versiegelt und aufnimmt.

## Revendications

1. Ensemble d'électrodes ayant une structure dans laquelle une pluralité de cellules élémentaires sont liées à une surface d'un premier séparateur dont la longueur est plus grande que la largeur et sont empilées dans une configuration en zigzag ou enroulées séquentiellement,
dans lequel le premier séparateur comporte un substrat poreux en polyoléfine et une première couche de colle d'électrode poreuse sur une surface du substrat poreux en polyoléfine, auquel les électrodes des cellules élémentaires sont collées, formées au niveau de seulement une surface de celui-ci à laquelle les cellules élémentaires sont liées, et consistant en un mélange de particules inorganiques et d'un polymère liant, et
dans lequel chacune des cellules élémentaires comporte un deuxième séparateur qui comporte un substrat poreux en polyoléfine et des deuxièmes couches de colle d'électrode poreuses sur les deux surfaces du substrat poreux en polyoléfine, auquel les électrodes de la cellule élémentaire sont collées, formées aux deux surfaces de celui-ci, et consistant en un mélange de particules inorganiques et d'un polymère liant,
dans lequel le substrat poreux en polyoléfine est fait d'un polymère sélectionné parmi un groupe comprenant le polyéthylène, le polypropylène et le polybutylène.

2. Ensemble d'électrodes selon la revendication 1, dans lequel chacune des cellules élémentaires est une cellule complète comportant des électrodes opposées avec des structures différentes.

3. Ensemble d'électrodes selon la revendication 1, dans lequel chacune des cellules élémentaires est une bi-cellule comportant des électrodes opposées avec la même structure.

4. Ensemble d'électrodes selon la revendication 1, dans lequel les particules inorganiques de la première couche de colle d'électrode poreuse et les particules inorganiques des deuxièmes couches de colle d'électrode poreuses sont chacune sélectionnées parmi le groupe consistant en des particules inorganiques ayant une constante diélectrique d'au moins 5, des particules inorganiques ayant la capacité de transporter des ions de lithium, et des mélanges de celles-ci.

5. Ensemble d'électrodes selon la revendication 4, dans lequel les particules inorganiques ayant une constante diélectrique d'au moins 5 sont sélectionnées parmi le groupe comprenant des particules BaTiO₃, Pb(Zrₓ, Ti₁₋ₓ)O₃ (PZT, 0 < x < 1), Pb₁₋ₓLaₓZr_{1-y}Ti_{y}O₃ (PLZT, 0 < x < 1, 0 < y < 1), (1-x)Pb(Mg_{1/3}Nb_{2/3})03₋ₓ,<PbTiO₃ (PMN-PT, 0 < x < 1), hafnia (HfO₂), SrTiO₃, Sn0₂, CeO₂, MgO, NiO, CaO, ZnO, ZrO₂, SiO₂, Y₂O₃, A1₂O₃, SiC, TiO₂, et des mélanges de celles-ci.

6. Ensemble d'électrodes selon la revendication 4, dans lequel les particules inorganiques ayant la capacité de transporter les ions de lithium sont sélectionnées parmi le groupe comprenant des particules de phosphate de lithium (Li₃PO₄), des particules de phosphate de titane et de lithium (Liₓ₋Ti_{y}(PO₄)₃, 0 < x < 2, 0 < y < 3), des particules de phosphate, de titane, d'aluminium et de lithium (LiₓAl_{y}Ti_{z}(PO₄)₃, 0 < x < 2, 0 < y < 1, 0 < z < 3), des particules de verre de type LiAlTiP)ₓO_{y} (0 < x < 4, 0 < y < 13), des particules de titanate de lanthane et de lithium (LiₓLa_{y}TiO₃, 0 < x < 2, 0 < y < 3), des particules de thiophospate de germanium et de lithium (LiₓGe_{y}P_{z}S_{w}, 0 < x < 4, 0 < y < 1, 0 < z < 1, 0 < w < 5), des particules de nitrure de lithium (LiₓN_{y}, 0 < x < 4, 0 < y < 2), des particules de verre de type SiS₂ (LiₓSi_{y}S_{z}, 0 < x < 3, 0 < y < 2, 0 < z < 4), des particules de verre de type P₂S₅ (LiₓP_{y}S_{z}, 0 < x < 3, 0 < y < 3, 0 < z < 7) et des mélanges de celles-ci.

7. Ensemble d'électrodes selon la revendication 1, dans lequel le polymère liant de la première couche de colle d'électrode poreuse et le polymère liant des deuxièmes couches de colle d'électrode poreuses sont chacun sélectionnés indépendamment parmi le groupe comprenant le fluorure de polyvinylidène-co-hexafluoropropylène, le fluorure de polyvinylidène-co-trichloroéthylène, le polyméthacrylate de méthyle, le polyacrylate de butyle, le polyacrylonitrile, le polyvinylpyrrolidone, l'acétate de polyvinyle, l'alcool de polyvinyle, l'acétate de polyéthylène-vinyle, l'oxyde de polyéthylène, le polyarylate, l'acétate de cellulose, l'acétobutyrate de cellulose, l'acétate propionate de cellulose, le cyanoéthylpullulane, l'alcool de cyanoéthyl-polyvinyle, la cyanoéthyl cellulose, le cyanoéthyl sucrose, le pullulane, la carboxyméthylcellulose et des composés de faible poids moléculaire ayant un poids moléculaire de 10 000 g/mol ou plus faible.

8. Ensemble d'électrodes selon la revendication 1, dans lequel le rapport de poids entre les particules inorganiques et le polymère liant de la première couche de colle d'électrode poreuse et le rapport de poids entre les particules inorganiques et le polymère liant dans les deuxièmes couches de colle d'électrode poreuses sont situés chacun indépendamment entre 10:90 et 99:1.

9. Dispositif électrochimique comprenant l'ensemble d'électrodes selon la revendication 1.

10. Batterie secondaire comprenant l'ensemble d'électrodes selon la revendication 1 et un boîtier renfermant de façon étanche et logeant l'ensemble d'électrodes avec une solution électrolytique.
